# EUROPÄISCHE PATENTSCHRIFT

(11) **EP 2 886 308 B1**
(45) Veröffentlichungstag und Bekanntmachung des Hinweises auf die Patenterteilung: **31.08.2016**
(21) Anmeldenummer: 14187882.7
(22) Anmeldetag: 07.10.2014
(51) Int. Cl.: B29C 70/38

(54) **Vorrichtung zum Legen von Faserbändern**
Device for the laying down of fibre slivers
Dispositif de pose de bandes de fibre

(30) Priorität: 16.12.2013 AT 508302013
(43) Veröffentlichungstag der Anmeldung: 24.06.2015
(73) Patentinhaber: GFM - GmbH, 4400 Steyr (AT)
(72) Erfinder: Dietachmayr, Harald, 4522 Sierning (AT)
(74) Vertreter: Patentanwaltskanzlei Hübscher

(56) Entgegenhaltungen:
- EP-B1- 0 371 289
- DE-A1- 2 753 272
- US-A- 5 454 897
- US-A1- 2007 044 922

## Beschreibung

Die Erfindung bezieht sich auf eine Vorrichtung zum Legen von Faserbändern mit einer Umlenkführung für die Faserbänder aus quer zur Umlenkachse nebeneinandergereihten Drucklamellen und mit einem in Legerichtung verlagerbaren Gestell zur Aufnahme der Drucklamellen.

Zum Herstellen von Fasergelegen werden üblicherweise Legeköpfe mit einer Umlenkführung für die Faserbänder eingesetzt, die mit Hilfe von diese Umlenkführung bildenden, nebeneinandergereihten Drucklamellen an die bereits gelegten Faserlagen angedrückt werden. Die Faserbänder, die ein eine Faserschicht tragendes Klebeband umfassen, werden von einer Vorratsrolle im Ausmaß der Vorschubbewegung des Legekopfs abgezogen und der Umlenkführung zugeführt, um einerseits die Faserschicht an die bereits gelegten Faserlagen anzudrücken und anderseits das Klebeband von der Faserschicht abzuziehen, was einen vergleichsweise kleinen Umlenkradius erfordert. Da die einzelnen Faserlagen des Geleges ohne Lufteinschlüsse dicht aufeinandergelegt werden sollen, ist für eine entsprechende Druckbeaufschlagung der Faserbänder durch die Umlenkführung zu sorgen. Zu diesem Zweck ist es bekannt (EP 0 371 289 B1), die zu einem Paket nebeneinandergereihten Drucklamellen voneinander unabhängig in Andrückrichtung verschiebbar in einem Gestell zu lagern und über eine Membran mit einem Druckmittel zu beaufschlagen, sodass aufgrund der Flexibilität der Membran die einzelnen Drucklamellen auch einem ungleichmäßigen Verlauf der bereits gelegten Faserlagen folgen können.

Um die beim Andrücken der Faserbänder an die bereits gelegten Faserlagen zwischen den Drucklamellen und dem Klebeband der Faserbänder entstehende Reibung zu verringern, ist es darüber hinaus bekannt (US 4 351 688 A, US 2007/044 922 A1), die Drucklamellen durch Druckringe zu ersetzen, die auf in Andrückrichtung verschiebbar geführten Lagerscheiben drehbar gelagert sind. Unabhängig davon, ob die auf den federnd abgestützten Lagerscheiben gelagerten Druckringe je für sich über Druckrollen beaufschlagt werden (US 4 351 688 A) oder ob sich die Lagerscheiben auf Druckzylindern abstützen (US 2007/044922 A1), haben diese Druckringe den Nachteil, dass die verschiebbare Lagerung ihrer Lagerscheiben vergleichsweise große Durchmesser der Druckringe bedingt, was sich nicht nur auf den auf das Faserband ausübbaren Anpressdruck, sondern auch auf das Abziehen des Klebebands von der Faserschicht der Faserbänder nachteilig auswirkt.

Der Erfindung liegt somit die Aufgabe zugrunde, bei einer Vorrichtung zum Legen von Faserbändern eine Umlenkführung für die Faserbänder zu schaffen, die unter vorteilhaften Reibungsbedingungen einerseits eine gute Anpressung der Faserbänder an die bereits gelegten Faserlagen und anderseits ein sicheres Abziehen des Klebebands von der Faserschicht erlaubt, ohne Gefahr zu laufen, dass beim Abziehen des Klebebands die Faserschicht wieder teilweise vom Gelege abgehoben wird.

Ausgehend von einer Vorrichtung der eingangs geschilderten Art löst die Erfindung die gestellte Aufgabe dadurch, dass zwischen Drucklamellen mit einer Gleitfläche zur Bandumlenkung Drucklamellen mit Rollen zur Bandumlenkung vorgesehen sind und dass die seitlich an den Drucklamellen angeordneten Halterungen für die Rollen in Andrückrichtung verschiebbar in Ausnehmungen der Drucklamellen mit den Gleitflächen eingreifen.

Da zufolge dieser Maßnahmen nicht die Rollen selbst, sondern die die Rollen zur Bandumlenkung aufweisenden Drucklamellen beaufschlagt werden, bestehen hinsichtlich der Rollenlagerung keine Einschränkungen, sodass Rollen mit einem entsprechend kleinen Durchmesser mit der Wirkung zum Einsatz kommen können, dass das Faserband mit einem vorteilhaften Anpressdruck auf das bereits gelegte Fasergelege aufgebracht werden kann, ohne ein einfaches Abziehen des Klebebands von der Faserschicht zu gefährden. Trotz der Lagerung der Rollen für die Bandumlenkung über seitlich der Drucklamellen vorgesehene Halterungen kann die Breite der mit den Rollen versehenen Drucklamellen auf die Rollenbreite beschränkt bleiben, weil die seitlich an den Drucklamellen angeordneten Halterungen in Andrückrichtung verschiebbar in Ausnehmungen der anschließenden Drucklamellen mit den Gleitflächen eingreifen. Die voneinander unabhängige Druckbeaufschlagung der Drucklamellen mit und ohne Rollen über eine gemeinsame Membran ist somit gewährleistet, ohne zwischen den Drucklamellen einen Abstand vorsehen zu müssen. Obwohl die Drucklamellen mit den Rollen zwischen Drucklamellen mit einer Gleitfläche zur Bandumlenkung vorzusehen sind, wird der Reibwiderstand zwischen der erfindungsgemäß ausgebildeten Umlenkführung und den Faserbändern im Vergleich zu bekannten Umlenkführungen mit Drucklamellen ohne Rollen erheblich verringert. Besonders einfache Konstruktionsverhältnisse ergeben sich in diesem Zusammenhang, wenn die Rollen auf in seitlich an den Drucklamellen angeordneten Halterungen gehaltenen Achsen gelagert sind.

Werden durch die Ausnehmungen zur Aufnahme der Halterungen für die Rollen vom übrigen Lamellenkörper abgesetzte, in Andrückrichtung federnde Gleitschuhe gebildet, so ergibt sich der zusätzliche Vorteil, dass diese Gleitschuhe bei einer entsprechenden federnden Vorspannung unabhängig von der individuellen Beaufschlagung der Drucklamellen der jeweiligen Oberflächenform des bereits gebildeten Fasergeleges folgen können, was besonders vorteilhafte Andrückbedingungen für das Faserband weitgehend unabhängig von den örtlichen Verformungseigenschaften der Membran mit sich bringt. Eine weitere Abstufung der Druckbeaufschlagung der Faserbänder über deren Breite kann dadurch erreicht werden, dass die Gleitschuhe der Drucklamellen durch zur Lamellenebene parallele Schlitze in Gleitsegmente unterteilt sind. Die durch die je für sich vorgespannten Gleitsegmente gebildeten Beaufschlagungsstufen ermöglichen eine voneinander unabhängige Druckbeaufschlagung des Faserbands im Bereich jedes Gleitsegments, was besonders günstige Bedingungen zum Aufbringen der Faserschichten des Faserbands auf die bereits gelegten Faserlagen erlaubt.

Eine den federnden Gleitschuhen vergleichbare Wirkung kann für die Rollen zur Umlenkführung der Faserbänder dadurch erzielt werden, dass die als Rillenscheiben ausgebildeten Rollen mit Hilfe von um eine Lagerrolle geführten, elastischen Endloszügen in radialer Anlage an in Andrückrichtung federnd gegenüber den Halterungen abgestützten Lageraufnahmen gehalten sind. Durch die federnd abgestützten Lageraufnahmen für die Rillenscheiben können diese bei einer Beaufschlagung der Drucklamellen über die federnd abgestützten Lageraufnahmen vorgespannt werden, sodass die Rillenscheiben im Rahmen dieser Vorspannung voneinander unabhängig dem bereits vorhandenen Fasergelege folgen können. Mit Hilfe der elastischen Endloszüge werden die sich aneinander seitlich abstützenden Rillenscheiben im Eingriff mit der Lageraufnahme gehalten, wobei die elastische Dehnung dieser Endloszüge für die Zulassung der über die vorgespannten Lageraufnahmen möglichen Verlagerungen der Rillenscheiben in Andrückrichtung erforderlich ist. Die Lageraufnahmen werden zwischen den seitlichen Halterungen eingespannt gehalten, die somit ein Widerlager für die Federelemente der Lageraufnahmen bilden.

Aufgrund der möglichen federnden Vorspannung sowohl der Gleitschuhe der einen Drucklamellen als auch der Rillenscheiben der anderen Drucklamellen kann insbesondere für dünne Faserbänder eine individuelle Beaufschlagung der Drucklamellen entfallen, was einfache Konstruktionsverhältnisse mit sich bringt, weil die einzelnen Lamellen lediglich unverschiebbar in einem Gestell zusammengefasst werden müssen, das mit einer entsprechenden Druckkraft zum Vorspannen der Gleitschuhe bzw. der Rillenscheiben beaufschlagt wird.

Um die Reibung der Rillenscheiben in den Lageraufnahmen gering zu halten, können die Lageraufnahmen in die Rillenscheiben eingreifende Wälzkörper aufweisen.

In der Zeichnung ist der Erfindungsgegenstand beispielsweise dargestellt. Es zeigen
- Fig. 1: eine erfindungsgemäße Vorrichtung ausschnittsweise im Bereich der Umlenkführung für die Faserbänder in einem vereinfachten Längsschnitt,
- Fig. 2: diese Vorrichtung in einem Schnitt nach der Linie II-II der Fig. 1.
- Fig. 3: einen Schnitt nach der Linie III-III der Fig. 1 in einem größeren Maßstab,
- Fig. 4: eine Ausführungsvariante der Drucklamellen in einer Seitenansicht ausschnittsweise im Bereich der Rollen zur Bandumlenkung,
- Fig. 5: die Drucklamellen gemäß der Fig. 4 in einer stirnseitigen Ansicht,
- Fig. 6: eine weitere Ausführungsform einer Drucklamelle mit Rollen für die Bandumlenkung in einer zum Teil aufgerissenen Seitenansicht in einem größeren Maßstab und
- Fig. 7: die Drucklamelle nach der Fig. 6 in einem Schnitt nach der Linie VII-VII der Fig. 6.

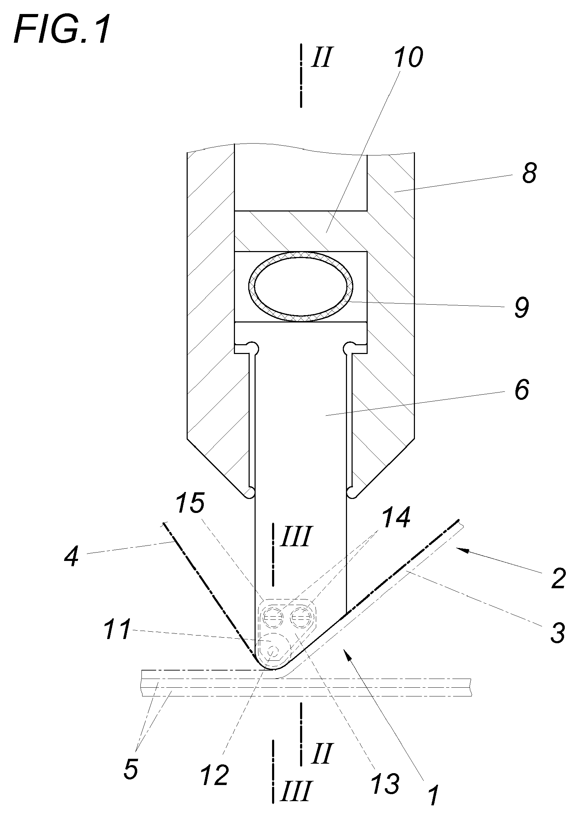

Gemäß dem Ausführungsbeispiel nach den Fig. 1 bis 3 weist die Vorrichtung einen Legekopf mit einer Umlenkführung 1 für Faserbänder 2 auf, die ein eine Faserschicht 3 tragendes Klebeband 4 umfassen. Diese Faserbänder 2 werden von einer Vorratsrolle abgezogen und mit Hilfe der Umlenkführung 1 an die bereits gelegten Faserlagen 5 eines zu bildenden Fasergeleges angedrückt, wobei das Klebeband 4 von der Faserschicht 3 des Faserbands 2 abgezogen wird, und zwar mit einem vergleichsweise geringen Umlenkradius. Die Umlenkführung 1 setzt sich aus einer Mehrzahl von senkrecht zur Umlenkachse nebeneinandergereihten Drucklamellen 6 und 7 zusammen, die in einem Gestell 8 in Andrückrichtung verschiebbar geführt sind und mit Hilfe einer Membran 9 gemeinsam mit einem Druckmittel beaufschlagt werden. Um einfache Konstruktionsverhältnisse zu erreichen, wird die Membran 9 im Ausführungsbeispiel durch einen Druckschlauch gebildet, der sich auf der den Drucklamellen 6, 7 gegenüberliegenden Seite an einer Gestellwand 10 als Widerlager abstützt. Mit einer Druckbeaufschlagung der Membran 9 werden die Drucklamellen 6, 7 an die bereits gelegten Faserlagen 5 angedrückt, wobei aufgrund der Flexibilität der Membran 9 der Stellweg der einzelnen Drucklamellen 6, 7 von der Oberflächenform der bereits gelegten Faserlagen 5 abhängt.

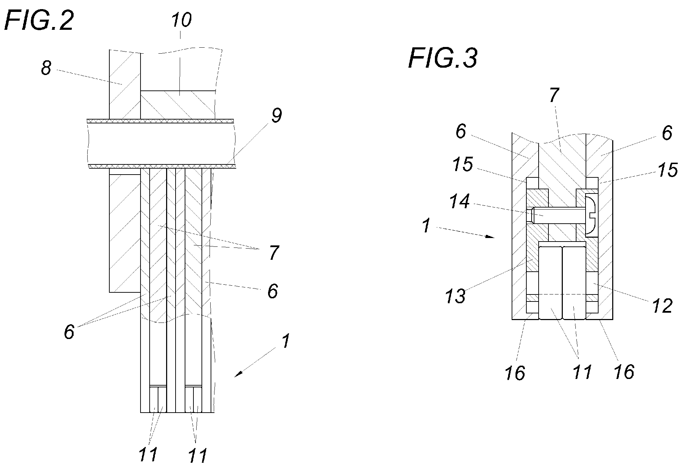

Um den Reibungswiderstand zwischen dem Klebeband 4 und der Umlenkführung 1 beim Andrücken des Faserbands 2 an die bereits gelegten Faserlagen 5 zu verringern, sind die Lamellen 7 mit Rollen 11 für die Bandumlenkung versehen. Die Anordnung ist dabei so getroffen, dass die Rollen 11 auf Achsen 12 drehbar lagern, die in seitlichen Halterungen 13 gehalten sind. Diese Halterungen 13 sind über Schrauben 14 seitlich an den Drucklamellen 7 befestigt, wie dies insbesondere der Fig. 3 entnommen werden kann. Da die seitlich über die Drucklamellen 7 vorstehenden Halterungen 13 in seitliche Ausnehmungen 15 der die Drucklamellen 7 zwischen sich aufnehmenden Drucklamellen 6 eingreifen, und zwar mit einem Verlagerungsspiel in Andrückrichtung, können die Drucklamellen 6, 7 eine in Richtung der Bandbreite im Wesentlichen geschlossene Umlenkfläche für das Faserband 2 bilden, ohne auf eine voneinander unabhängige Verlagerung in Andrückrichtung verzichten zu müssen. Die Umlenkfläche für die Faserbänder 2 werden einerseits über die Gleitflächen 16 der Drucklamellen 6 und anderseits durch die Rollen 11 gebildet, deren Radius dem Krümmungsradius der Gleitflächen 16 entspricht und unter Berücksichtigung der jeweiligen Anforderungen ausreichend klein gehalten werden kann, weil hinsichtlich des Rollendurchmessers kaum Konstruktionsbeschränkungen gegeben sind.

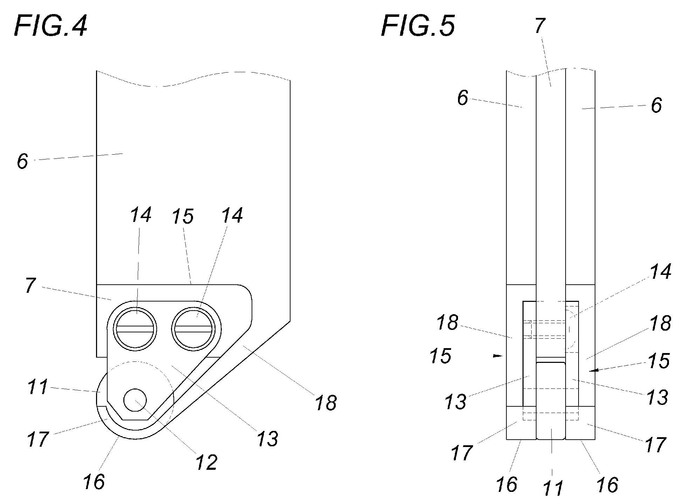

Wie die Ausführung der Drucklamellen 6 gemäß dem Ausführungsbeispiel nach den Fig. 4 und 5 zeigt, können die Ausnehmungen 15 zur Aufnahme der Halterungen 13 für die Achsen 12 der Rollen 11 auch dazu benützt werden, einen vom übrigen Lamellenkörper gesonderten Gleitschuh 17 auszubilden, der über einen verbleibenden Steg 18 mit dem übrigen Lamellenkörper so verbunden ist, dass der Gleitschuh 17 in Andrückrichtung federnd abgestützt wird. Diese federnde Abstützung des Gleitschuhs 17 erlaubt eine zusätzliche Anpassung des Gleitschuhs 17 an den Oberflächenverlauf des bereits gelegten Fasergeleges unabhängig von der Beaufschlagungslage der Drucklamellen 6 über die Membran 9. Aus der Fig. 5 ist ersichtlich, dass die Drucklamellen 7 zum Unterschied zur Ausbildung nach den Fig. 1 bis 3 nur mit einer Rolle 11 zur Bandumlenkung ausgerüstet sein können, sodass die Drucklamellen 6 und 7 gleiche Dicke aufweisen.

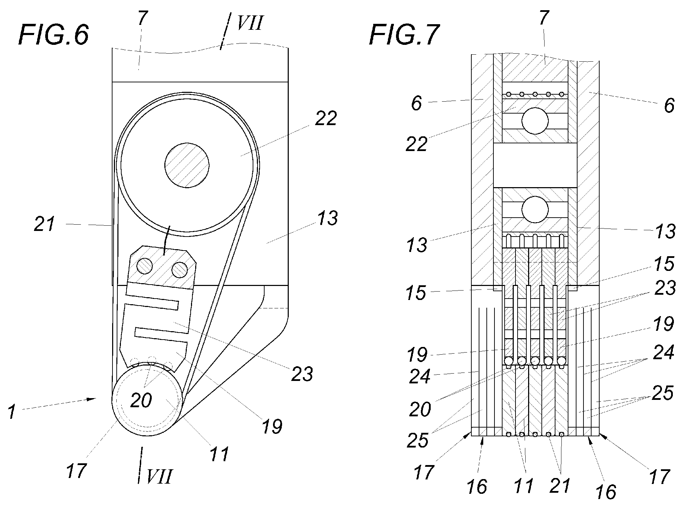

In den Fig. 6 und 7 wird ein Ausführungsbeispiel dargestellt, mit dessen Hilfe eine abgestufte Druckbeaufschlagung im Bereich der einzelnen Drucklamellen 6, 7 ermöglicht wird, um das Faserband 2 in kleineren Abstufungen an die bereits gelegten Faserlagen 5 andrücken zu können. Zu diesem Zweck sind die Drucklamellen 7 mit mehreren Rollen 11 in Form von Rillenscheiben versehen, die aneinander anliegen und zwischen den Drucklamellen 6 axial geführt sind. Diese Rillenscheiben greifen in Lageraufnahmen 19 ein, die mit die Rillenscheiben über deren Rillen führenden Wälzkörpern 20 versehen sind. Zur radialen Festlegung innerhalb der Lageraufnahmen 19 sind die Rillenscheiben über einen elastischen Endloszug 21 gegenüber einer Lagerrolle 22 abgestützt, die in den seitlichen Halterungen 13 der Drucklamellen 7 gelagert ist, sodass die axial zwischen den Lamellen 6 geführten Rillenscheiben in radialer Richtung über die elastischen Endloszüge 21 und die Lagerrolle 22 als Widerlager im Eingriff mit den Lageraufnahmen 19 gehalten werden. Die Lageraufnahmen 19 selbst sind jeweils über Federelemente 23 in Andrückrichtung federnd gegenüber den Halterungen 13 abgestützt. Dies bedeutet, dass bei einer Druckbeaufschlagung der Drucklamellen 7 über die Membran 9 die Rollen 11 in Form der Rillenscheiben unter einer federnden Vorspannung der Federelemente 23 an das Gelege angedrückt werden. Die einzelnen Rillenscheiben können daher im Rahmen der Vorspannung der ihnen zugeordneten Federelemente 23 voneinander unabhängig in Andrückrichtung verlagert werden, was eine feinstufige Anpassung der Umlenkführung 1 an den Oberflächenverlauf des bereits gelegten Fasergeleges erlaubt.

In ähnlicher Weise können die Gleitschuhe 17 der Drucklamellen 6 durch zur Lamellenebene parallele Schlitze 24 in voneinander unabhängig federbelastete Gleitsegmente 25 unterteilt werden, wie dies der Fig. 7 entnommen werden kann. Damit wird auch im Bereich der Drucklamellen 6 eine feinstufige Nachführung der Gleitschuhe 17 entlang der Gelegeoberfläche möglich.

Da bei einer jeweils federnden Abstützung die Gleitschuhe 17 der Drucklamellen 6 und die Rollen 11 der Drucklamellen 7 bei einer entsprechenden Vorspannung je für sich federnd der Oberflächengestalt der bereits gelegten Faserlagen 5 folgen können, und zwar bei einer entsprechenden Vorspannung unabhängig von einer Einzelbeaufschlagung der Drucklamellen 6, 7, kann in einem solchen Fall auf eine individuelle Beaufschlagung der Drucklamellen 6, 7 verzichtet werden, was erhebliche Konstruktionsvereinfachungen mit sich bringt.

Die Drucklamellen 6, 7 brauchen ja lediglich im Gestell 8 verschiebefest eingespannt zu werden, um das Gestell zur Sicherstellung der erforderlichen Vorspannung der federnden Gleitschuhe 17 und der federnden Rollen 11 mit einer entsprechenden Kraft an das bereits gelegte Fasergelege anzudrücken.

## Patentansprüche

1. Vorrichtung zum Legen von Faserbändern mit einer Umlenkführung (1) für die Faserbänder (2) aus quer zur Umlenkachse nebeneinandergereihten Drucklamellen (6) und mit einem in Legerichtung verlagerbaren Gestell (8) zur Aufnahme der Drucklamellen (6), **dadurch gekennzeichnet, dass** zwischen Drucklamellen (6) mit einer Gleitfläche (16) zur Bandumlenkung Drucklamellen (7) mit Rollen (11) zur Bandumlenkung vorgesehen sind und dass die seitlich an den Drucklamellen (7) angeordneten Halterungen (13) für die Rollen (11) in Andrückrichtung verschiebbar in Ausnehmungen (15) der Drucklamellen (6) mit den Gleitflächen (16) eingreifen.

2. Vorrichtung nach Anspruch 1, **dadurch gekennzeichnet, dass** die Rollen (11) der Drucklamellen (7) auf in den seitlichen Halterungen (13) gehaltenen Achsen (12) gelagert sind.

3. Vorrichtung nach Anspruch 1 oder 2, **dadurch gekennzeichnet, dass** die Drucklamellen (6) in Andrückrichtung federnde, durch die Ausnehmungen (15) vom übrigen Lamellenkörper gesonderte Gleitschuhe (17) bilden.

4. Vorrichtung nach Anspruch 3, **dadurch gekennzeichnet, dass** die Gleitschuhe (17) der Drucklamellen (6) in zur Lamellenebene parallele, voneinander unabhängig federnde Gleitsegmente (15) unterteilt sind.

5. Vorrichtung nach Anspruch 1, **dadurch gekennzeichnet, dass** die als Rillenscheiben ausgebildeten Rollen (11) mit Hilfe von um eine Lagerrolle (22) geführten, elastischen Endloszügen (21) in radialer Anlage an in Andrückrichtung federnd gegenüber den Halterungen (13) abgestützten Lageraufnahmen (19) gehalten sind.

6. Vorrichtung nach Anspruch 5, **dadurch gekennzeichnet, dass** die Lageraufnahmen (19) in die Rillenscheiben eingreifende Wälzkörper (20) aufweisen.

## Claims

1. Apparatus for laying fibre slivers, comprising a deflection guide (1) for the fibre slivers (2) consisting of pressure plates (6) arranged next to one another transversely to the deflection axis and having a frame (8) for receiving the pressure plates (6) which is displaceable in the laying direction, **characterised in that** pressure plates (7) with rollers (11) for deflecting the sliver are provided between the pressure plates (6) with a sliding surface (16) for the deflection of the sliver, and **in that** the retainers (13) for the rollers (11), which retainers are arranged laterally on the pressure plates (7), displaceably engage in the pressing direction into recesses (15) of the pressure plates (6) with the sliding surfaces (16).

2. Apparatus as claimed in claim 1, **characterised in that** the rollers (11) of the pressure plates (7) are mounted on shafts (12) held in lateral retainers (13).

3. Apparatus as claimed in claim 1 or 2, **characterised in that** the pressure plates (6) form sliding shoes (17) which are resilient in the pressing direction and are separated from the rest of the plate body by the recesses (15).

4. Apparatus as claimed in claim 3, **characterised in that** the sliding shoes (17) of the pressure plates (6) are subdivided into sliding segments (15) which are parallel to the plane of the plates and are resilient independently of each other.

5. Apparatus as claimed in claim 1, **characterised in that** the rollers (11) formed as grooved pulleys are held in radial contact against bearing receivers (19) by means of elastic endless belts (21) guided around a bearing roller (22), which bearing receivers are supported in the pressing direction in a resilient fashion with respect to the retainers (13).

6. Apparatus as claimed in claim 5, **characterised in that** the bearing receivers (19) comprise rolling bodies (20) engaging into the grooved pulleys.

## Revendications

1. Dispositif de pose de bandes de fibre avec un guide de déviation (1) pour les bandes de fibre (2) constitué de plaques de pression (6) disposées de façon adjacentes les unes aux autres transversalement par rapport à l'axe de déviation et avec un châssis (8) qui peut être déplacé dans la direction de pose, pour recevoir les plaques de pression (6), **caractérisé en ce qu'**entre les plaques de pression (6), il est prévu des plaques de pression (7) avec une surface de glissement (16) pour dévier les bandes, avec des rouleaux (11) pour dévier les bandes et **en ce que** des supports (13) disposés latéralement aux plaques de pression (7) s'engagent avec les surfaces de glissement (16) pour les rouleaux (11) dans la direction de pressage, de manière mobile, dans des évidements (15) des plaques de pression (6).

2. Dispositif selon la revendication 1, **caractérisé en ce que** les rouleaux (11) des plaques de pression (7) sont placés sur des axes (12) maintenus dans les supports (13) latéraux.

3. Dispositif selon la revendication 1 ou 2, **caractérisé en ce que** les plaques de pression (6) forment, dans la direction de pressage, des patins glissants (17) flexibles, séparés des autres corps de plaque par les évidements (15).

4. Dispositif selon la revendication 3, **caractérisé en ce que** les patins glissants (17) des plaques de pression (6) sont divisés en segments coulissants (15) flexibles, indépendants les uns des autres, parallèles par rapport au plan des plaques.

5. Dispositif selon la revendication 1, **caractérisé en ce que** les rouleaux (11) réalisés en tant que disques à rainure sont maintenus à l'aide de câbles sans fin (21) élastiques, guidés autour d'un rouleau formant palier (22), en positionnement radial, au niveau de logements formant palier (19) soutenus dans la direction de pressage, de manière flexible, par rapport aux supports (13).

6. Dispositif selon la revendication 5, **caractérisé en ce que** les logements formant palier (19) présentent des corps de roulement (20) venant en prise dans les disques à rainure.
